# EUROPÄISCHE PATENTANMELDUNG

(11) **EP 1 499 138 A1**
(43) Veröffentlichungstag der Anmeldung: **19.01.2005**
(21) Anmeldenummer: 03291784.1
(22) Anmeldetag: 18.07.2003
(51) Int. Cl.: H04Q 7/22, H04Q 7/32, H04L 12/56

(54) **Verfahren zur Informationsübermittlung zwischen Endgeräten eines Kommunikationsnetzes sowie Programmmodul und Endgerät hierfür**

(71) Anmelder: ALCATEL, 75008 Paris (FR)
(72) Erfinder: Rupp, Stephan, Dr., 74354 Besigheim (DE); Banet, Franz-Josef, 71665 Vaihingen (Enz) (DE); Stahl, Uwe, 71229 Leonberg (DE)
(74) Vertreter: Rausch, Gabriele, Dr.

(57) **Zusammenfassung**

Die Erfindung betrifft ein Verfahren zur Informationsübermittlung zwischen Endgeräten (TA, TB) eines Kommunikationsnetzes (MN), wobei diese Endgeräte jeweils einen Datenspeicher zur Adressen- und Informationsspeicherung und Mittel zum Aufbau von Datenverbindungen zur Kommunikation untereinander aufweisen, wobei ein anrufendes Endgerät (TA) eine Anfrage zur Übermittlung einer Information an ein angerufenes Endgerät (TB) übermittelt, das angerufene Endgerät (TB) gespeicherte Information eines für das anrufende Endgerät (TA) freigegebenen Teils des Datenspeichers ausliest und das angerufene Endgerät mittels der empfangenen Adresse des anrufenden Endgeräts (TA) eine Nachricht mit der gewünschten Information an das anrufende Endgerät (TA) zurücksendet, sowie ein Programmmodul (CLA, CLB) und ein Endgerät (TA, TB) hierfür.

## Beschreibung

Die Erfindung betrifft ein Verfahren nach dem Oberbegriff des Anspruchs 1, ein Programmodul nach dem Oberbegriff des Anspruchs 9, und ein Endgerät nach dem Oberbegriff des Anspruchs 12 hierfür.

Zur Suche von Information sind im Internet Verfahren bekannt, bei welchem der Benutzer durch Eingabe der Internetadresse eines Servers eines Diensteanbieters in sein Endgerät eine sogenannte Suchmaske anfordert. Hier kann der Benutzer nun mehr oder weniger genau spezifizieren, beispielsweise vermittels einer Eingabe von Suchworten oder Auswahl von Attributen in die Suchmaske, welche Information er zu erhalten wünscht. Darauf erhält er dann beispielsweise eine Liste mit relevanten Einträgen, aus denen er dann bestimmte Einträge auswählen kann.

Zu einer Suche unbekannter Netzadressen sind eine Vielzahl von Verfahren bekannt. Ein konventionelles Verfahren stellt die sogenannte Telefonauskunft dar. Mittels eines Telefonendgeräts wird dabei eine Telefonverbindung mit einer Netzzentrale hergestellt und der Name desjenigen übermittelt, dessen (Netz-) Adresse gesucht wird. Mittels einer zentralen Datenbank, welche eine Zuordnung von Namen und Adressangaben (Rufnummer, Wohnadresse etc.) möglichst aller Teilnehmer eines Netzbetreibers oder Landes enthält, wird die gefragte Adresse ermittelt und an das anfragende Endgerät übermittelt. Ein Verfahren zur automatischen Suche von Netzadressen wird im Internet von einer Vielzahl von Informationsanbietern für die Endgeräte des Internets angeboten.

Diese Verfahren haben allerdings den Nachteil, dass große Datenmengen zentral ständig aktuell gehalten werden müssen. Dies stellt einerseits einen großen Aufwand an Infrastruktur dar (d.h. große und schnelle Datenbank, genügend breiter Zugang zu dieser Datenbank) und andererseits auch einen großen Pflegeaufwand dar (d.h. jede Adressänderung muss zügig eingetragen werden).

Für das Internet sind Protokolle und Mechanismen bekannt, welche es ermöglichen, dass die Endgeräte des Internets ein sogenanntes "Peer-to-Peer" Netz bilden können. Im Gegensatz zu den oben genannten Serverbasierten Informationssystemen, bei welchem anfragende Endgeräte oder Clients den Antwort gebenden zentralen Servern oder gegenüberstehen, kommen Peer-to-Peer Netze grundsätzlich ohne zentrale Service-Infrastruktur (Server oder Datenbanken) aus. Geeignete Protokolle dafür sind beispielsweise im Projekt JXTA der Firma SUN Microsystems beschrieben.

Das elektronische Telefonverzeichnis eines Telefonendgeräts wird in der Regel von jedem Benutzer im täglichen Gebrauch eingesetzt. In dieses Telefonbuch kann üblicherweise eine bestimmte Anzahl von Netzadressen, d.h. Rufnummern, diesen Adressen zugeordnete Namen und gegebenenfalls weitere Information gespeichert werden. Allerdings ist der Nutzen dieses Telefonbuchs darauf beschränkt, die Kommunikation mit bekannten Teilnehmern zu erleichtern oder die einmal eingegebene Information zu einem Namen wiederholt abzurufen. Sobald eine Information zu einem Namen gesucht wird, der nicht in diesem Telefonbuch geführt wird oder dessen zugeordnete Information unvollständig ist müssen andere Suchverfahren angewandt werden.

Der Erfindung liegt die Aufgabe zugrunde, ein Verfahren und geeignete Mittel zu schaffen, welche es ermöglichen, einen dezentralen Informationsdienst allein mit den Endgeräten eines Kommunikationsnetzes zu realisieren.

Erfindungsgemäß wird diese Aufgabe durch ein Verfahren nach der Lehre des Anspruchs 1, einem Programmodul nach der Lehre des Anspruchs 10 und einem Endgerät nach der Lehre des Anspruchs 11 gelöst.

Grundgedanke der Erfindung ist die Schaffung eines Peer-to-Peer Netzes durch die Verknüpfung der Adressverzeichnisse der Endgeräte eines Kommunikationsnetzes, vorzugsweise eines Mobilfunknetzes, welches eine Datenkommunikation zwischen den Endgeräten vorsieht. Dabei übermittelt ein anrufendes Endgerät eine Anfrage zur Übermittlung einer Information an ein angerufenes Endgerät. Das angerufene Endgerät liest in seinem Adressverzeichnis gespeicherte, zur allgemeinen Einsicht durch andere Endgeräte freigegebene Information und sendet eine Nachricht mit einer gewünschten Information oder über die gewünschte Information an das anrufende Endgerät zurück.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnungen weiter erläutert:
- Fig.1: zeigt schematisch eine Kommunikationsbeziehung zwischen zwei erfindungsgemäßen Endgeräten,
- Fig.2: zeigt beispielhafte Kommunikationsbeziehungen zwischen erfindungsgemäßen Endgeräten bei der Ausführung eines erfindungsgemäßen Verfahrens,
- Fig.3a: zeigt einen ersten speziellen Kommunikationsablauf gemäß Fig.2,
- Fig.3b: zeigt einen zweiten speziellen Kommunikationsablauf gemäß Fig.2 und
- Fig.4: zeigt beispielhaft den Inhalt und die Funktionsstruktur eines Dateneintrags eines erfindungsgemäßen Endgeräts.

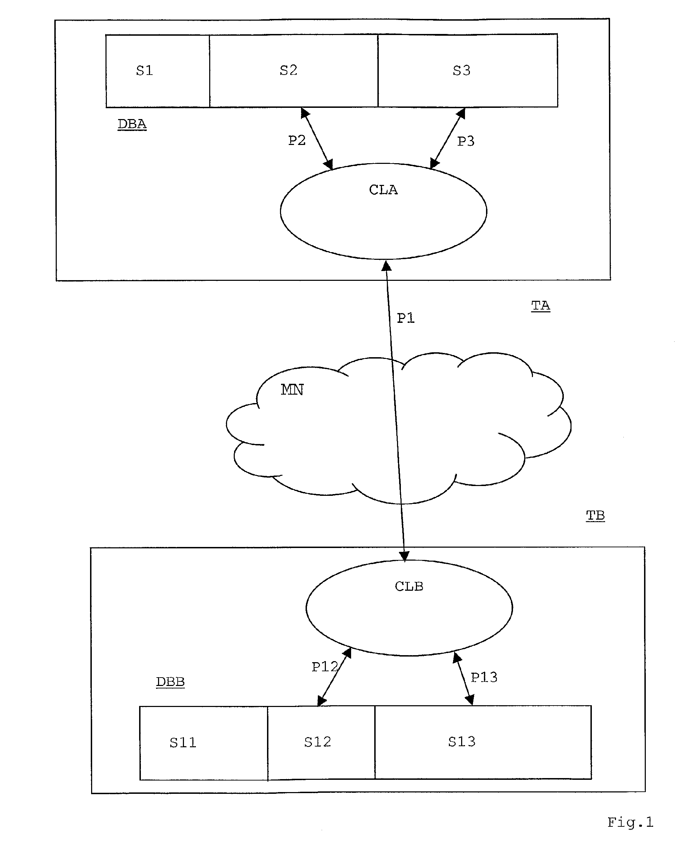

Fig.1 zeigt schematisch zwei erfindungsgemäße Endgeräte, beispielsweise ein anrufendes Endgerät TA und ein angerufene Endgerät TB, welche eine über ein mobiles Kommunikationsnetzwerk MN durch eine externe Kommunikationsbeziehung miteinander verbunden sind, welche durch einen Doppelpfeil P1 veranschaulicht ist. Jedes dieser Endgeräte TA und TB, im folgenden auch Peers genannt, weist einen Datenspeicher DBA bzw. DBB auf, welche hier beispielhaft jeweils in drei Segmente unterteilt sind: ein privates Segment S1 bzw. S11, ein begrenzt zugängliches Segment S2 bzw. 12 und ein öffentliches Segment S3 bzw. S13. Weiter weist jedes Endgerät TA und TB ein Anwendungsprogramm CLA bzw. CLB auf, wobei das erste Anwendungsprogramm CLA mittels einer ersten durch einen Doppelpfeil veranschaulichten Kommunikationsverbindung P2 auf das begrenzt zugängliche Segment S2 zugreift und mittels einer zweiten, durch einen Doppelpfeil veranschaulichten Kommunikationsverbindung P3 auf das öffentlich zugängliche Segment S3 zugreift. Analog greift das zweite Anwendungsprogramm CLB des angerufenen Endgeräts mittels der internen Kommunikationsverbindungen P12 und P13 auf die Segmente S12 bzw. S13 zu.

Die oben genannten Peers TA und TB werden beispielsweise durch Mobiltelefone, d.h. Endgeräte eines Mobilfunknetzes (z.B. eines Mobilfunknetzes nach den Normen von GSM (Global System for Mobile Communications) realisiert, auf welche entsprechende Anwendungsprogramme CLA und CLB geladen werden. So gibt beispielsweise die Java Micro Edition der Firma SUN, die inzwischen auf vielen Mobiltelefonen verfügbar ist, die Voraussetzung für eine solche Realisierung. In der Terminologie von Java bezeichnet man die Hersteller übergreifende Verallgemeinerung des Mobiltelefons als "Mobile Information Device (MID)". Unter dem Begriff "MIDlet" versteht man dann eine Anwendung, die auf ein solches Gerät geladen wird. Die Namensgebung orientiert sich an den bekannten Applets (kleine Applikationen im Browserfenster) oder den Servlets (Serverseitige Applikationen). In Anlehnung an diesen Sprachgebrauch werden diese MIDlets für Kommunikationsanwendungen im folgenden auch als "Chatlets" bezeichnet.

Die Kommunikationsorgane des Endgeräts oder Peers TA und TB bilden beispielhaft sogenannte Endpunkte. Beispielsweise stellt ein erster Eckpunkt die Mobilfunkschnittstelle (z.B. GSM) und ein zweiter Eckpunkt eine Bluetooth-Schnittstelle eines mobilen Endgeräts oder Mobiltelefons dar. Die Peer-to-Peer Verbindungen zwischen den beteiligten Peers können durch Mobilfunkverbindungen zwischen Mobilfunkendgeräten (z.B. GSM), oder beispielsweise auch durch Bluetooth oder andere Verbindungen insbesondere kurzer Reichweite realisiert werden.

Das Chatlet CLA oder CLB hat Zugriff auf die Adress- oder Rufverzeichnisse des anrufenden Endgeräts TA bzw. des angerufenen Endgeräts CLB. Beim Anklicken einer Rufnummer im anrufenden Endgerät TA wird diese vom Chatlet CLA analog einer Web-Adresse oder einem sogenannten Uniform Resource Locator (URL) eingesetzt, um Zugriff auf das angerufene Endgerät TB zu bekommen. Diese Rufnummern können im Display des Endgeräts TA dargestellt werden analog zu der URL des Internets anklickbar gemacht werden. Bei einer angeklickten Rufnummern kann man dann auch von einer MRL (Mobile Resource Locator) sprechen.

Der oben beschriebene Zugriff auf das angerufene Endgerät TB sollte aus Gründen des Datenschutzes von dessen Besitzer unterbunden werden können oder nur einem begrenzten Teilnehmerkreis zugänglich gemacht werden können. Entsprechend der in Fig. 1 gewählten Aufteilung der Speicher DBA und DBB wird jeweils ein ersten Teil des Datenspeichers S1 bzw. S11 für einen entfernten Zugriff ganz gesperrt (private sector), ein zweiten Bereich S2 bzw. S12 nur für bestimmte Endgeräte zugänglich gemacht (restricted sector) und ein dritter Bereich S3 bzw. S13 allgemein zugänglich gemacht (public sector).

Das Chatlet CLA oder CLB selbst ist, wie oben beschrieben, ein Anwendungsprogramm, das beispielsweise innerhalb der Java Laufzeitumgebung des Mobiltelefons läuft. Der wichtigste Teil des Chatlets sind die sogenannten "Teilnehmerinstanzen". Teilnehmerinstanzen sind nichts weiter als die Verallgemeinerung der Einträge in der Namensliste des Mobiltelefons. In der Namensliste gehören zu einem Eintrag mindestens der Name und die Telefonnummer. Der Eintrag kann aber auch eine komplette Visitenkarte, d.h. alle möglichen privaten und geschäftlichen Telefonnummern, FAX, e-mail, Anschrift und einige Stichworte enthalten.

Die Einträge können individuell durch die Teilnehmer erfolgen. Diese Einträge lassen sich auch mit anderen Teilnehmern austauschen, d.h. Einträge im angerufenen Endgerät TB können in das anrufende Endgerät TA übernommen werden.

Beim Auswählen eines Eintrages aus der Namensliste erzeugt das Chatlet CLA des anrufenden Endgeräts TA eine Anfrage, welche an das Chatlet CLB des angerufenen Endgeräts übermittelt wird. Das Chatlet CLB des angerufenen Endgeräts erstellt ein Exemplar der gewünschten Daten, beispielsweise die über einen Teilnehmer verfügbaren Daten, im Arbeitsspeicher des Endgeräts TB. Diese Teilnehmerinstanz enthält neben den Attributen einer Visitenkarte wie Namen und Telefonnummern weitere Attribute, z.B. die für den weiter oben erwähnten Telefondienst verfügbaren Icons oder Bilder, bzw. Informationen wie z.B. Hobbies oder Interessen, die der Teilnehmer in der Öffentlichkeit bzw. in seinem Bekanntenkreis kommunizieren möchte. Ausser den Attributen enthalten die Teilnehmerinstanzen auch Operationen oder Methoden, die das Chatlet CLA oder CLB aufrufen kann, z.B. für den Zugriff auf die Namensliste im Mobiltelefon des eingetragenen Teilnehmers. Einträge dürfen unvollständig sein (z.B. nur einige Telefonnummern, sonst nichts).

Attribute und/oder Methoden werden jeweils von den betreffende Teilnehmern selbst erzeugt und können in ihrer Sichtbarkeit für die Öffentlichkeit begrenzt werden. Für die Öffentlichkeit sichtbare Attribute und Methoden, d.h. vom Chatlet CLA eines anrufenden Endgeräts TA sichtbare Attribute und wählbare Methoden, werden als "public" deklariert, andere nur für einen definierten Teilnehmerkreis sichtbare Attribute und Methoden werden als "private" bezeichnet.

Was der Peer seiner Umgebung an Wissen und Können zur Verfügung stellen möchte, kann er in sogenannten Anzeigen (Advertisements) gespeichert halten. Diese Anzeigen können entweder von anderen Peers angefordert werden oder können an bestimmte Endgeräte (subscribers) versendet werden. Zu den Angeboten eines Peers an andere Peers gehören beispielsweise Dienstleistungen, Anwendungsprogramme und Inhalte .Was der Peer über seine Umgebung weiß (z.B. Wissen über andere Peers), speichert er beispielsweise in seinem lokalen Cache (z.B. Informationen, Dokumente).

Eine Anfrage zur Übermittlung einer Information kann ein Suchwort oder eine Kategorie enthalten. Eine entsprechende Nachricht mit der gewünschten Information enthält dann nur Information bezüglich derjenigen Informationseinträge, welche ein übereinstimmendes Suchwort aufweisen oder einer übereinstimmenden Kategorie zugeordnet sind. Es kann beispielsweise vorgesehen werden, dass eine Nachricht nur dann erstellt wird, wenn mindestens ein Eintrag übereinstimmende Suchworte aufweist oder Kategorien zugeordnet ist.

Den Chatlets in den Endgeräten TA und TB wird, wie oben beschrieben, ein wechselseitiger Zugriff aufeinander gestattet. Dies ermöglicht das Aufspannen eines beliebig großen Informationsnetzes mit einer großen, jedoch verteilten Menge an aktuellen Informationen. Für den Benutzer eines Endgeräts TA stellt sich dieses Informationsnetz so dar, als ob er all diese Information auf seinem Endgerät TA gespeichert hat, d.h. die Struktur des Netzes mit seinen aktiven Endgeräten bleibt für den Benutzer weitgehend transparent.

Durch die Möglichkeit, Einträge automatisch miteinander auszutauschen, kann ein lernfähiges Netz entstehen. Neue Telefonnummern nach einem Umzug oder Providerwechsel verbreiten sich von selber. Leute, die gefragt sind und die gerne gefragt werden, werden in viele Teilnehmerinstanzen abgebildet werden. Die Rolle der Chatlets besteht dabei aus übergeordneter Sicht in der Bereitstellung der geeigneten Kontaktadressen für den gewünschten Gesprächspartner. Mit Hilfe von Präsentationsdiensten wird die Ansprechbarkeit des Gesprächspartners dargestellt und die sinnvollen Kontaktmöglichkeiten gleich zur Aktivierung auf Knopfdruck bereitgestellt.

Der Verbindungsaufbau selber kann auf die konventionelle Art erfolgen, welche jeweils von denjenigen Netzen angeboten wird, in welchen das erfindungsgemäßen Verfahren angewandt werden soll. Dazu gehört die Bereitstellung geeigneter Codecs und die Transkodierung, sowie in der Regel auch der Kontrollfluss für den Aufbau und den Abbau von Verbindungen, z.B. in einer Dreier-Konferenz.

Alternativ wäre es auch möglich, dass ein Chatlet den Kontrollfluss und die Auswahl der Codecs übernimmt. In diesem Fall beschränken sich die Netze dann auf die Bereitstellung von Adressen und Transportkanälen.

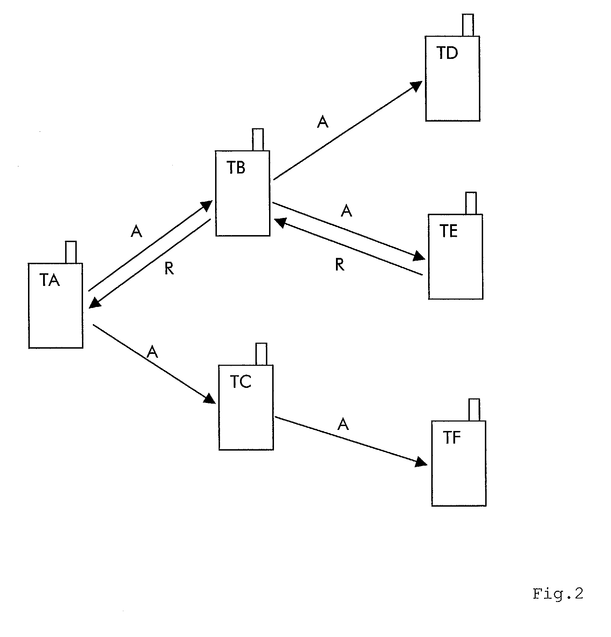

Fig. 2 zeigt eine beispielhafte Kommunikationsbeziehung zwischen erfindungsgemäßen Endgeräten zur Durchführung eines Informationssuchdienstes, bei welchem das anrufende Endgerät keine Kenntnis darüber hat, in welchem Endgerät eine gesuchte Information gespeichert ist.

Fig. 2 zeigt dazu ein anrufendes Endgerät, beispielsweise das anrufende Endgerät TA aus Fig.1 das angerufene Endgerät TB aus Fig.1 und weitere angerufene Endgeräte TC- TF. Vom anrufenden Endgerät TA zu jeweils den angerufenen Endgeräten TB und TC, vom Endgerät TB zu jeweils den Endgeräten TD und TE und vom Endgerät TC zum Endgerät TF ins ein Pfeil A eingezeichnet, welcher eine Anfrage zur Übermittlung bestimmter Information symbolisiert. Vom Endgerät TE zum Endgerät TB und von diesem Endgerät zum anrufenden Endgerät TA ist jeweils ein Pfeil R eingezeichnet, welcher eine Nachricht mit einer Antwort auf diese Anfrage symbolisiert.

Als Beispiel sei hier die Suche nach der Adresse eines Gesprächsteilnehmers beschrieben. Sofern diese Adresse im Datenspeicher des die Suche initiierenden oder anrufenden Endgeräts TA gespeichert ist, kann die gesuchte Information vom Chatlet CLA dieses Endgeräts TA dort sofort erstellt und beispielsweise direkt auf dem Display dieses Endgeräts angezeigt werden. Für den Fall, dass sich der gesuchte Gesprächspartner in den eigenen Teilnehmerinstanzen nicht findet, kontaktiert das Chatlet des anrufenden Endgeräts TA diejenigen Endgeräte, deren Instanzen den Zugriff auf Ihr jeweiliges Telefonverzeichnis gestattet, hier beispielhaft die Endgeräte TB und TC. Wird der gewünschte Gesprächspartner in einem dieser Endgeräte gefunden, kann ihn das entsprechende Chatlet kontaktieren oder eine Kopie der gefundenen Teilnehmerinstanz im eigenen Verzeichnis erzeugen. Dieser letztere Fall entspricht dem Austausch einer Visitenkarte im Teilnehmerverzeichnis.

Wird der gesuchte Gesprächspartner in den Verzeichnissen der abgefragten Endgeräte TB und TC nicht gefunden, so kann die Transaktion von den abgefragten Teilnehmerinstanzen aus weiter eskalieren, hier beispielsweise von dem Endgerät TB zu den Endgeräten TD und TE und vom Endgerät TC zum Endgerät TF. Hat beispielsweise das Endgerät TE die gesuchte Adresse gespeichert, so wird eine entsprechende Nachricht R von dort entweder über das in der Abfragekette liegende Endgerät TB oder unmittelbar an das anrufende Endgerät TA übermittelt.

Die Anzahl der erforderlichen Eskalationsstufen ist dabei grundsätzlich durchaus überschaubar. Fragt man in jeder Eskalationsstufe jeweils 100 neue Partner ab, so erreicht man mit 5 Stufen bereits 10 Milliarden Teilnehmer (10 hoch 2 hoch 5). Das wäre allerdings auch der schlechteste Fall. In Wirklichkeit ist die Suche deutlich effektiver, da durch die verketteten Verzeichnisse Beziehungsgeflechte abgefragt werden. Ein Ingenieur wird in der Regel leichter einen Spezialisten aus seinem Fachgebiet oder einem angrenzenden Gebiet finden als aus einer komplett anderen Branche oder einem Gebiet, das ihn nie interessiert hat. Dafür sorgen sein persönliches Telefonverzeichnis und die Verzeichnisse seiner Bekannten.

Eine weitere Möglichkeit besteht darin, Angebote einer Vielzahl von Teilnehmern in einem Rendezvouz-Peer, beispielsweise in das Endgerät TB gemäß Fig.2 abzulegen. So kann ein anrufendes Endgerät TA zunächst ein ihm bekanntes Endgerät TB anrufen, um von dort an weitere Endgeräte TD und TE zu gelangen, um eine bestimmte Information zu erhalten.

Um der Effektivität des unter Fig.2 beschriebenen Verfahrens Sorge zu tragen, muss verhindert werden, dass Anfragen sich explosionsartig und über unbestimmte Zeitabschnitte im Kommunikationsnetz fortpflanzen. Dazu sind folgende Maßnahmen möglich:

Jede Anfrage erhält einen Zeitstempel, woraufhin in den angerufenen Endgeräten TB, TC, TD, TE, TF geprüft wird, ob eine bestimmte Zeitspanne überschritten ist und diese Anfrage nur dann weiterbehandelt wird, wenn diese Zeitspanne noch nicht überschritten ist.

Um zu verhindern, dass Anfragen von einem entfernt in einer Anfragekette liegenden Endgerät wieder an ein näher liegendes Endgerät übermittelt wird (Zirkelschlüsse), kann die Adresse jedes Endgeräts über welches die Anfrage läuft, zu der Anfrage hinzugefügt werden, ohne vorherige Absender-Adressen zu löschen. So würde die vom Endgerät TD empfangene Anfrage beispielsweise die Adressen der in der Abfragekette vorher liegenden Endgeräte TB und TA enthalten. Bei einer Weitervermittlung dieser Anfrage können dann all diejenigen Endgeräte ausgeschlossen werden, deren Adressen in den Anfragen bereits enthalten sind.

Im folgenden sollen die Kommunikationsbeziehungen zwischen den Chatlets von beispielhaft an einem unter Fig.2 beschriebenen Verfahren beteiligten Endgeräten detailliert dargestellt werden.

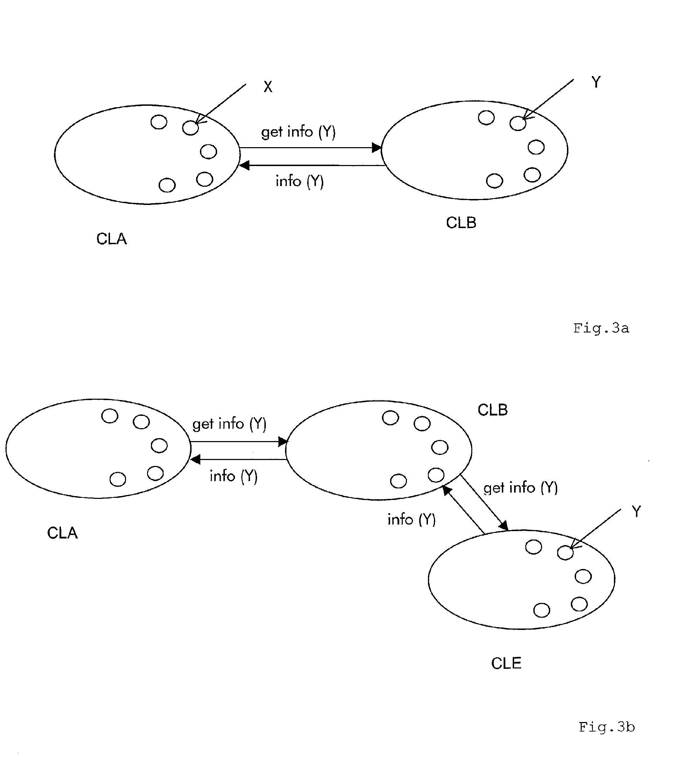

Dazu zeigt Fig.3a eine Kommunikationsbeziehung zweier Chatlets, wenn die vom anrufenden Endgerät gewünschte Information im Endgerät des unmittelbar angerufenen Endgeräts verfügbar ist und es zeigt Fig.3b eine Kommunikationsbeziehung dreier Chatlets, wenn die vom anrufenden Endgerät gewünschte Information nicht im Endgerät des unmittelbar angerufenen Endgeräts, sondern erst in einem von diesem angerufenen Endgerät weiter angerufenen Endgerät verfügbar ist.

Fig.3a zeigt beispielhaft das Chatlet CLA eines anrufenden Endgeräts, im folgenden auch anrufendes Chatlet CLA genannt, und das Chatlet CLB eines angerufenen Endgeräts, im folgenden auch angerufenes Chatlet CLB genannt. Das anrufende Chatlet CLA weist eine Vielzahl von Teilnehmereinträgen auf, von denen ein Teilnehmereintrag X, d.h. ein Eintrag über einen Teilnehmer X, beispielhaft bezeichnet ist. Das angerufene Chatlet CLB weist ebenfalls eine Vielzahl von Teilnehmereinträgen auf, von denen ein Teilnehmereintrag Y, d.h. ein Eintrag über einen Teilnehmer Y, beispielhaft bezeichnet ist. Eine Anfrage des anrufenden Chatlets CLA an das angerufene Chatlet CLB nach Information über den Teilnehmer Y ist durch einen Pfeil mit der Bezeichnung get info (Y) dargestellt und eine Nachricht mit der gesuchten Information des angerufenen Chatlets CLB an das anrufende Chatlet CLA über den Teilnehmer Y ist durch einen Pfeil mit der Bezeichnung info (Y) dargestellt.

Hier wird also der Kommunikationsablauf für folgendes beispielhaftes Szenario dargestellt:
- Ein Teilnehmer gibt den Namen des Teilnehmers Y in das anrufende Endgerät ein.
- Das anrufende Chatlet CLA prüft, ob unter diesem Namen Einträge, insbesondere die Adresse, gespeichert sind und sendet die Anfrage nach Information über den Teilnehmer Y, get info Y, an das Chatlet eines oder mehrere Endgeräte, hier beispielsweise an das angerufene Chatlet CLB eines Endgeräts.
- Das angerufene Chatlet CLB prüft und stellt fest, dass der gesuchte Eintrag, insbesondere die Adresse des Teilnehmers Y, vorhanden ist und dass der anrufende Teilnehmer berechtigt ist, diese Information zu empfangen und übermittelt eine Nachricht mit dieser Information, info y and das anrufende Chatlet.

Dabei kann get info (Y) als gemäß der Java Terminologie als Methode und info (Y) als Attribut bezeichnet werden:
get_info (Y): Aufruf der über den Teilnehmer Y gespeicherten Information, beispielsweise über Öffnungszeiten, Sprechstunden, Bereitschaftsdienst usw. Diese Information wird in das Mobiltelefon des anrufenden Endgeräts übertragen. Dort kann dann gegebenenfalls weiter ausgewählt werden (z.B. Anzeige der nächsten Apotheke im Bereitschaftsdienst).
info (Y): ein Adressfeld, z.B. für die Postanschrift, Öffnungszeiten, Sprechstunden, Bereitschaftsdienst des Teilnehmers Y.

Fig.3b zeigt beispielhaft das anrufendes Chatlet CLA, und das angerufenes Chatlet CLB aus Fig.3a und ein vom angerufenen Chatlet CLB weiteres angerufenes Chatlet CLE. Die Chatlets CLA, CLB und CLE weisen jeweils eine Vielzahl von Teilnehmereinträgen auf. Im unterschied zu Fig.3a sei hier angenommen, dass die Teilnehmerinformation über den Teilnehmer Y nicht im angerufenen Chatlet CLB sondern im weiter angerufenen Chatlet CLE gespeichert ist. Die Anfrage des anrufenden Chatlets CLA an das angerufene Chatlet CLB ist wie unter Fig.3a durch den Pfeil mit der Bezeichnung get info (Y) dargestellt. Anders als in Fig.3a wird diese Anfrage an das weiter angerufene Chatlet E weitervermittelt, wobei diese Kommunikation hier durch einen Pfeil mit ebenfalls der Bezeichnung info (Y) vom angerufenen Chatlet CLB zum weiter angerufenen Chatlet CLE dargestellt wird. Eine Nachricht mit der gesuchten Information, analog zu Fig.3a jeweils durch einen Pfeil mit der Bezeichnung info (Y) dargestellt, führt vom weiter angerufenen Chatlet CLE zum angerufenen Chatlets CLB und von dort zum anrufendendem Chatlet CLA.

Hier wird der Kommunikationsablauf für folgendes gegenüber Fig.3a erweitertes, beispielhaftes Szenario dargestellt:
- Ein Teilnehmer gibt den Namen des Teilnehmers Y in das anrufende Endgerät ein.
- Das anrufende Chatlet CLA prüft, ob unter diesem Namen Einträge, insbesondere die Adresse, gespeichert sind und sendet die Anfrage nach Information über den Teilnehmer Y, get info Y, an das Chatlet eines oder mehrere Endgeräte, hier beispielsweise an das angerufene Chatlet CLB eines Endgeräts.
- Das angerufene Chatlet CLB prüft und stellt fest, dass der gesuchte Eintrag, insbesondere die Adresse des Teilnehmers Y, nicht vorhanden ist und leitet diese Anfrage weiter an ein oder mehrere Endgeräte, deren Adressen im Datenspeicher gespeichert sind, hier beispielhaft an das weiter angerufene Chatlet E.
- Dieses Chatlet CLE prüft und stellt fest, dass der gesuchte Eintrag, insbesondere die Adresse des Teilnehmers Y, vorhanden ist und dass der anrufende Teilnehmer (Chatlet A) und/oder das zwischengeschaltete Chatlet B berechtigt ist, diese Information zu empfangen und übermittelt eine Nachricht mit dieser Information, info y and das angerufene Chatlet B.
- Das angerufene Chatlet CLB übermittelt diese Nachricht info y and das anrufende Chatlet A.

Alternativ zu diesem Szenario kann das weiter angerufene Chatlet E die Information auch unmittelbar an das anrufende Chatlet A übermitteln. Dazu muss die Adresse des anrufenden Endgeräts in ein Steuerfeld des Anfrage get info (Y) eingetragen werden.

Wie oben beschrieben, ist es vorteilhaft, wenn jedes Endgerät bei Weitergabe einer Anfrage seine Adresse hinzufügt. Dann kann ein weiter angerufenes Endgerät stets feststellen, welche Endgeräte diese Anfrage bereits erhalten haben und eine Weitergabe dieser Anfrage an diese Endgeräte unterbinden.

In einer weiteren Alternative kann das angerufene Endgerät TB oder das weiter angerufene Endgerät TE eine Zuordnung von Suchworten oder Kategorien und Adressen weiterer Endgeräte gespeichert haben. Die Anfrage kann dann beispielsweise statt eines konkreten Namens ein oder mehrere Suchworte und oder Kategorien enthalten. Das angerufene Endgerät leitet diese Anfrage dann nur an solche weitere Endgeräte weiter, welche diese(s) Suchwort(e) aufweisen oder diesen Kategorien zugeordnet sind.

In einer vorteilhaften Weiterbildung des erfindungsgemäßen Verfahrens wird eine Schaffung von ortsselektiven Dienstleistungen (engl: Location based Services) ermöglicht, welche ohne zwischengeschaltete Diensteanbieter (engl.: Service Provider) von den dienstleistenden Endgeräte-Nutzern selber bereitgestellt werden können. Dadurch lassen sich kostengünstige Lösungen verwirklichen, da eine zentrale Pflege von Daten entfällt. Darüber hinaus bietet dieses Verfahren den Nutzern den Vorteil einer leichten Bedienbarkeit und guter Transparenz.

Die Ortsinformation wird dabei nicht wie bei Diensten mit zentraler Verwaltung in einem (zentralen) Server eingepflegt, sondern direkt in die Mobiltelefone derjenigen Personen, die ortselektive Dienste (engl.: Location Based Services) anbieten möchten (also z.B. direkt in das Mobiltelefon des Fahrers eines Taxiunternehmen). Das Einbringen der Daten erfolgt entweder automatisch, beispielsweise durch ein zyklisches Update oder ein Update bei Abruf der Ortsinformation durch das Mobiltelefon, oder wird vom Dienstanbieter selber ins Mobiltelfon eingetragen (z.B. statische Ortsinformation über den Wohn- oder Geschäftsort). Diese Informationen können von Kunden des Dienstes abgefragt werden.

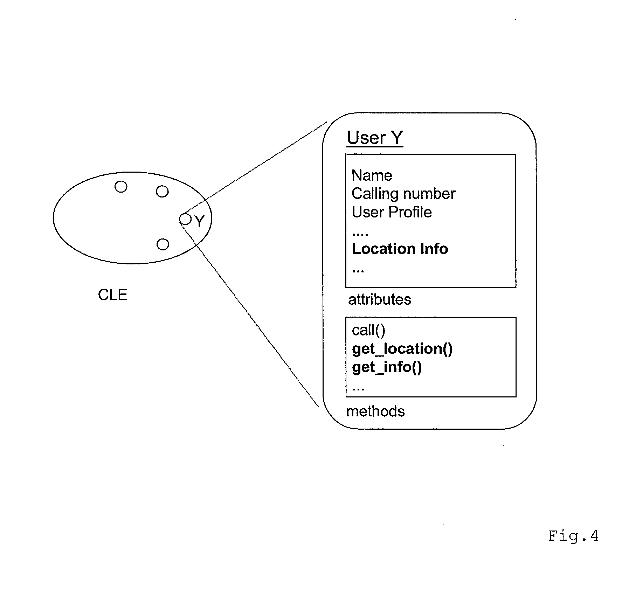

Eine exemplarische Ausgestaltung eines Teilnehmereintrags zeigt Fig.4.

Fig.4 zeigt das Chatlet CLE beispielhaft des weiteren angerufenen Endgeräts TE aus Fig.2 mit gespeicherten Teilnehmerinstanzen oder Teilnehmereinträgen. Der Teilnehmereintrag eines Teilnehmers Y ist beispielhaft dargestellt. Dieser Eintrag enthält als Attribute beispielhaft den Namen, die Rufnummer oder Adresse (Calling number), ein Profil (user profile) und eine Ortsinformation (Location Info). Als Methoden enthält dieser Eintrag einen Aufruf zur Übermittlung von Information (get_info()) und einen Aufruf zur Übermittlung von Ortsinformation (get_location()).

Innerhalb des Teilnehmereintrags über den Teilnehmer Y des Chatlets gibt es für hier gegenüber dem oben beschriebenen Attribut Info() folgendes zusätzliches Attribut:
Location: aktuelle Ortsinformation (z.B. geographische Koordinaten) des Mobiltelefons des Teilnehmers. Ein Update der Ortsinformation (Location Update) aus dem Netz, bei dem der Teilnehmer angemeldet ist, erfolgt auf dem Mobiltelefon des abgefragten Teilnehmers, z.B. bei Abruf der Methode "get_location()" durch einen anderen Teilnehmer.
Innerhalb der Teilnehmereinträge der Chatlets gibt es ortsselektive Dienste zusätzlich zu der oben beschriebene Methode get info () folgende zusätzliche Methode:
   get_location(): Aufruf der aktuelle Koordinaten des Mobiltelefones des angefragten Teilnehmers. Diese Information wird auf das Mobiltelefon des anfragenden Teilnehmers übertragen und kann dort weiter ausgewertet werden (z.B. bei der Suche nach dem geographisch nächsten Taxifahrer)

Auf Tastendruck oder anklicken eines "icons" kann dabei ohne Telefonnummern oder Vermittlungsdienst unmittelbar ein telefonischer Kontakt hergestellt werden, wenn das angerufene Endgerät im ausgewählten Ortsbereich liegt. Denkbare Anwendungen dafür sind beispielsweise: Taxiruf, Ärztliche Bereitschaft, Fachärzte in der Nähe und deren Sprechstunden, Bereitschaftsdienst von Apotheken, Öffnungszeiten und Ansprechpartner bei Behörden, sogenannte Blind-Dates, virtuelle Zusammenkünfte zu speziellen Interessen in der Umgebung.

## Patentansprüche

1. Verfahren zur Informationsübermittlung zwischen Endgeräten (TA, TB, TC, TD, TE, TF) eines Kommunikationsnetzes (MN), wobei diese Endgeräte jeweils einen Datenspeicher zur Adressen- und Informationsspeicherung und Mittel zum Aufbau von Datenverbindungen zur Kommunikation untereinander aufweisen, **dadurch gekennzeichnet, dass**
• ein anrufendes Endgerät (TA) eine Anfrage zur Übermittlung einer Information an ein angerufenes Endgerät (TB, TC) übermittelt,
• das angerufene Endgerät (TB, TC) gespeicherte Information eines für das anrufende Endgerät (TA) freigegebenen Teil des Datenspeichers ausliest und
• das angerufene Endgerät mittels der empfangenen Adresse des anrufenden Endgeräts (TA) eine Nachricht mit der gewünschten Information an das anrufende Endgerät (TA) zurücksendet.

2. Verfahren nach Anspruch 1, **dadurch gekennzeichnet, dass** die Nachricht mit der gewünschten Information sowohl Attribute, insbesondere Informationen über einen Teilnehmer, als auch Methoden enthält, mit welchen auf das anrufende Endgerät (TA) zugegriffen werden kann.

3. Verfahren nach Anspruch 1, **dadurch gekennzeichnet, dass** die Anfrage zur Übermittlung einer Information ein Suchwort oder eine Kategorie enthält, und dass die Nachricht mit der gewünschten Information nur Information bezüglich derjenigen Informationseinträge enthält, welche ein übereinstimmendes Suchwort aufweisen oder einer übereinstimmenden Kategorie zugewiesen sind.

4. Verfahren nach Anspruch 2, **dadurch gekennzeichnet, dass** das angerufene Endgerät (TB, TC) eine Zuordnung von Suchworten oder Kategorien und Adressen weiterer Endgeräte gespeichert hat, und dass das angerufene Endgerät diese Anfrage an solche weitere Endgeräte (TD, TE, TF) weiterleitet, welche diesem Suchwort oder Kategorie zugeordnet sind.

5. Verfahren nach Anspruch 3, **dadurch gekennzeichnet, dass** das angerufene Endgerät (TB, TC) eine Nachricht mit der gewünschten Information an das anrufende Endgerät (TA) zurücksendet, falls diese Information im Datenspeicher des angerufenen Endgerätes gespeichert ist und dass, falls diese Information dort nicht gespeichert ist, diese Anfrage an mindestens ein weiteres Endgerät (TD, TE, TF) derjenigen Endgeräte weiterleitet, deren Adressen im Datenspeicher des angerufenen Endgeräts (TB, TC) gespeichert sind.

6. Verfahren nach Anspruch 4, **dadurch gekennzeichnet, dass** die Anfrage einen Zeitstempel enthält, und dass im anrufenden Endgerät (TB, TC, TD, TE, TF) geprüft wird, ob eine bestimmte Zeitspanne überschritten ist und diese Anfrage nur dann weiterbehandelt wird, wenn diese Zeitspanne noch nicht überschritten ist.

7. Verfahren nach Anspruch 1, **dadurch gekennzeichnet, dass** die Anfrage zur Übermittlung der Information automatisch nach anklicken einer im Display des anrufenden Endgeräts (TA) dargestellten Adresse automatisch erstellt und an das angerufene Endgerät (TB, TC) übermittelt wird.

8. Verfahren nach Anspruch 1, **dadurch gekennzeichnet, dass** der Datenspeicher des angerufenen Endgeräts (TB, TC) einen begrenzt freigegebenen und einen unbegrenzt freigegebenen Bereich aufweist, dass das angerufene Endgerät (TB, TC) eine Liste mit den Rufnummern oder Adressen derjenigen Endgeräte gespeichert hat, denen Zugriff auf Information des begrenzt freigegebenen Bereichs gewährt wird, und dass das angerufene Endgerät eine Antwort mit einer im begrenzt freigegebenen Bereich gespeicherten Information nur dann zurücksendet, falls die Rufnummer des anrufenden Endgeräts (TA) in dieser Liste gespeichert ist.

9. Verfahren nach Anspruch 1, **dadurch gekennzeichnet, dass** die Anfrage einen Ortsstempel aufweist, dass das angerufene Endgerät (TB, TC, TD, TE, TF) eine Information über seinen aktuellen Ort oder die Präsenz in einem bestimmten Ortsbereich erhält und diese Anfrage vom angerufenen Endgerät (TB, TC, TD) nur dann weiterbehandelt wird, wenn der Ortsstempel einen Ort innerhalb eines bestimmten Umkreises um den aktuellen Ort oder einen Ort innerhalb des bestimmten Ortsbereiches bezeichnet.

10. Verfahren nach Anspruch 1, **dadurch gekennzeichnet, dass** in den Datenspeicher gespeicherte Information mit einer Lebensdauer gekennzeichnet ist und nach Ablauf dieser Lebensdauer automatisch gelöscht wird.

11. Programmmodul (CLA, CLB) zum Ablauf einem angerufenen Endgerät (TD, TE, TF), welches einem Datenspeicher und Kommunikationsmittel zum Austausch von Daten mit weiteren Endgeräten aufweist, **dadurch gekennzeichnet, dass** die folgenden Funktionen ausgeführt werden:
• Empfangen einer Anfrage eines anrufenden Endgeräts (TA) in zur Übermittlung einer Nachricht mit einer im Datenspeicher gespeicherten Information,
• Prüfen, ob eine Nachricht mit einer entsprechenden Antwort mittels der im Datenspeicher gespeicherten Information erstellt werden kann,
• Erstellen einer Antwort, falls diese Nachricht erstellt werden kann und Übermittlung an das anrufende Endgerät (TA).

12. Endgerät (TA, TB, TC, TD, TE, TF) mit einem Programmodul (CLA, CLB) nach Anspruch 11.

## Geänderte Patentansprüche

### Geänderte Patentansprüche gemäss Regel 86(2) EPÜ.

1. Dezentrales Verfahren zur Informationsübermittlung zwischen Endgeräten (TA, TB, TC, TD, TE, TF) eines Kommunikationsnetzes (MN), wobei diese Endgeräte jeweils einen Datenspeicher zur Adressen- und Informationsspeicherung und Mittel zum Aufbau von Datenverbindungen zur Kommunikation untereinander aufweisen, bei dem
• ein anrufendes Endgerät (TA) eine Anfrage zur Übermittlung einer Information an ein angerufenes Endgerät (TB, TC) übermittelt,
• das angerufene Endgerät (TB, TC) gespeicherte Information eines für das anrufende Endgerät (TA) freigegebenen Teil des Datenspeichers ausliest und
• das angerufene Endgerät mittels der empfangenen Adresse des anrufenden Endgeräts (TA) eine Nachricht mit der gewünschten Information an das anrufende Endgerät (TA) zurücksendet, falls diese Information im Datenspeicher des angerufenen Endgerätes (TB, TC) gespeichert ist und, falls diese Information dort nicht gespeichert ist, diese Anfrage an mindestens ein weiteres Endgerät (TD, TE, TF) derjenigen Endgeräte weiterleitet, deren Adressen im Datenspeicher des angerufenen Endgeräts (TB, TC) gespeichert sind.

2. Verfahren nach Anspruch 1, **dadurch gekennzeichnet, dass** die Nachricht mit der gewünschten Information sowohl Attribute, insbesondere Informationen über einen Teilnehmer, als auch Methoden enthält, mit welchen auf das anrufende Endgerät (TA) zugegriffen werden kann.

3. Verfahren nach Anspruch 1, **dadurch gekennzeichnet, dass** die Anfrage zur Übermittlung einer Information ein Suchwort oder eine Kategorie enthält, und dass die Nachricht mit der gewünschten Information nur Information bezüglich derjenigen Informationseinträge enthält, welche ein übereinstimmendes Suchwort aufweisen oder einer übereinstimmenden Kategorie zugewiesen sind.

4. Verfahren nach Anspruch 2, **dadurch gekennzeichnet, dass** das angerufene Endgerät (TB, TC) eine Zuordnung von Suchworten oder Kategorien und Adressen weiterer Endgeräte gespeichert hat, und dass das angerufene Endgerät diese Anfrage an solche weitere Endgeräte (TD, TE, TF) weiterleitet, welche diesem Suchwort oder Kategorie zugeordnet sind.

5. Verfahren nach Anspruch 4, **dadurch gekennzeichnet, dass** die Anfrage einen Zeitstempel enthält, und dass im anrufenden Endgerät (TB, TC, TD, TE, TF) geprüft wird, ob eine bestimmte Zeitspanne überschritten ist und diese Anfrage nur dann weiterbehandelt wird, wenn diese Zeitspanne noch nicht überschritten ist.

6. Verfahren nach Anspruch 1, **dadurch gekennzeichnet, dass** die Anfrage zur Übermittlung der Information automatisch nach anklicken einer im Display des anrufenden Endgeräts (TA) dargestellten Adresse automatisch erstellt und an das angerufene Endgerät (TB, TC) übermittelt wird.

7. Verfahren nach Anspruch 1, **dadurch gekennzeichnet, dass** der Datenspeicher des angerufenen Endgeräts (TB, TC) einen begrenzt freigegebenen und einen unbegrenzt freigegebenen Bereich aufweist, dass das angerufene Endgerät (TB, TC) eine Liste mit den Rufnummern oder Adressen derjenigen Endgeräte gespeichert hat, denen Zugriff auf Information des begrenzt freigegebenen Bereichs gewährt wird, und dass das angerufene Endgerät eine Antwort mit einer im begrenzt freigegebenen Bereich gespeicherten Information nur dann zurücksendet, falls die Rufnummer des anrufenden Endgeräts (TA) in dieser Liste gespeichert ist.

8. Verfahren nach Anspruch 1, **dadurch gekennzeichnet, dass** die Anfrage einen Ortsstempel aufweist, dass das angerufene Endgerät (TB, TC, TD, TE, TF) eine Information über seinen aktuellen Ort oder die Präsenz in einem bestimmten Ortsbereich erhält und diese Anfrage vom angerufenen Endgerät (TB, TC, TD) nur dann weiterbehandelt wird, wenn der Ortsstempel einen Ort innerhalb eines bestimmten Umkreises um den aktuellen Ort oder einen Ort innerhalb des bestimmten Ortsbereiches bezeichnet.

9. Verfahren nach Anspruch 1, **dadurch gekennzeichnet, dass** in den Datenspeicher gespeicherte Information mit einer Lebensdauer gekennzeichnet ist und nach Ablauf dieser Lebensdauer automatisch gelöscht wird.

10. Programmmodul (CLA, CLB) zum Ablauf einem angerufenen Endgerät (TD, TE, TF), welches einem Datenspeicher und Kommunikationsmittel zum dezentralen Austausch von Daten mit weiteren Endgeräten aufweist, bei dem die folgenden Funktionen ausgeführt werden:
• Empfangen einer Anfrage eines anrufenden Endgeräts (TA) in zur Übermittlung einer Nachricht mit einer im Datenspeicher gespeicherten Information,
• Prüfen, ob eine Nachricht mit einer entsprechenden Antwort mittels der im Datenspeicher gespeicherten Information erstellt werden kann,
• Erstellen einer Antwort, falls diese Nachricht erstellt werden kann und Übermittlung an das anrufende Endgerät (TA).
• Weiterleiten der Anfrage an ein oder mehrere weitere Endgeräte, falls diese Nachricht nicht erstellt werden kann.

11. Endgerät (TA, TB, TC, TD, TE, TF) mit einem Programmodul (CLA, CLB) nach Anspruch 10.
